# EUROPEAN PATENT APPLICATION

(11) **EP 2 535 122 A1**
(43) Date of publication of application: **19.12.2012**
(21) Application number: 11004972.3
(22) Date of filing: 17.06.2011
(51) Int. Cl.: B09B 1/00, B09C 1/10

(54) **A method of waste dump re-cultivation, particularly re-cultivation of municipal waste**

(71) Applicant: Tworek, Henryk, 86-010 Koronowo (PL)
(72) Inventor: Tworek, Henryk, 86-010 Koronowo (PL)
(74) Representative: Cwiklinski, Grzegorz

(57) **Abstract**

The method of waste dump re-cultivation, particularly re-cultivation of municipal waste in which the surface of an area undergoing re-cultivation is covered with a layer of humus and sown with plants. It is characteristic that area undergoing re-cultivation is covered with a layer of humus the thickness of which varies from 0,2 to 0,25 m. and in spring it is planted with saplings of Boxelder Maple (Acer negundo) spaced from 0,8 x 0,6 m to 0,8 x 0,8 m. During the vegetation period from spring to late autumn at least one aeration of land is carried out with a rotary cultivator. In the first year of vegetation it is fertilized with mineral fertilizers containing assimilable nitrogen, phosphorus and potassium in the ratio 1:1:1 per pure element in the amount of 10 g to 50 g per m² of the surface area undergoing re-cultivation. While in the second and third year of the growing year soil samples are taken from the depth of 25 cm to 40 cm together with samples of wood pulp and determination of nitrogen, phosphorus and potassium is carried out. Then the amount and the relationship of these elements is adjusted to the results obtained. In the fourth year of vegetation an observation shall be made and, depending on the observed symptoms of deficiency of one element, proper fertilization shall be applied. Whereas in the fifth year of vegetation, in autumn, plants shall be cut down at a height of not more than 5 cm from the ground level and in the sixth year of cultivation, in spring, a few shoots growing out at each trunk are allowed to grow free so that in autumn the strongest shoot can be left and the perennial cycle can be repeated.

## Description

This invention concerns the method of waste dump re-cultivation, particularly re-cultivation of municipal waste.

There are many ways of re-cultivation of both municipal and industrial landfills which mainly involve covering the landfill with a layer of natural or compost soil or their mixture and protecting the surface against erosion by planting grass and rolling. The main difficulty and the greatest problem with re-cultivation of these areas is the barrenness of the land and the content of a variety of materials ranging from very slowly decaying to organic plant and animal household waste of varying consistency - from semi-solid, sticky to solid consistency, together with plastic used for bagging waste and rubbish.

An example can be the method of re-cultivation of industrial or municipal wasteland known from Polish patent description No. 175432 according to which the residue from the industrial wastewater treatment plants is mixed in a ratio of 1:2 to 1:10 with organic matter or hydrous municipal sewage sludge. In addition fertilizers, biological vaccines, bark, straw or sawdust are added. Pulp obtained in this way is transported to the landfill and put in a heap. Biological transformation process is carried out in the piles through aeration and moisture control. As a result artificial soil is obtained, which is spread in municipal landfills and then sown with plants. Preferably, during spreading a net should be applied for protection against adverse weather conditions, particularly against heavy rainfall or high temperatures until plants are suitably rooted.

Another example is the method of re-cultivation of industrial or municipal wasteland known from Polish patent description No. PL163933 according to which grass rolls of preferably 40 x 50 cm with peat substrate of 2-4 cm thickness are permanently applied on the levelled heaps of ashes, slag or waste.

The main problem with the re-cultivation of landfills is the periodic disappearance of grass vegetation related to seasons, particularly in the periods of drought in summer. It causes erosion of the applied soil cover and leaching of contaminants as well as a significant slowdown in the decomposition process of organic matter inside the landfill.

The essence of the invention is the fact that the surface of an area undergoing re-cultivation is covered with a layer of humus, the thickness of which varies from 0.2 to 0.25 m. and in spring it is planted with saplings of Boxelder Maple (Acer negundo) spaced from 0.8 x 0.6 m to 0.8 x 0.8 m. During the vegetation period from spring to late autumn at least one aeration of land is carried out with a rotary cultivator. In the first year of vegetation it is fertilized with mineral fertilizers containing assimilable nitrogen, phosphorus and potassium in the ratio 1:1:1 per pure element in the amount of 10g to 50g per m² of the surface area undergoing re-cultivation. In the second and third year of the growing year soil samples are taken from the depth of 25 cm to 40 cm together with samples of wood pulp and determination of nitrogen, phosphorus and potassium is carried out. Then the amount and the relationship of these elements is adjusted to the results obtained. In the fourth year of vegetation an observation shall be made and, depending on the observed symptoms of deficiency of one element, proper fertilization shall be applied. In the fifth year of vegetation, in autumn, plants shall be cut down at a height of not more than 5 cm from the ground level. Harvested timber can be subjected to seasoning. In the sixth year of cultivation, in spring, a few shoots growing out at each trunk are allowed to grow free so that in autumn the strongest shoot can be left and the perennial cycle can be repeated.

The invention is presented in an example, yet it is not limited to it in any way.

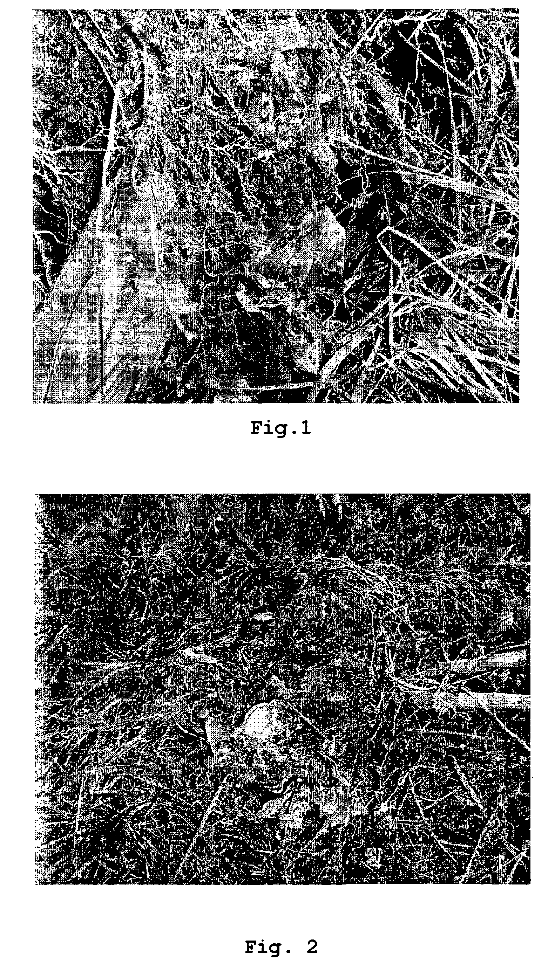

100 m² of landfill were planted in early spring with Boxelder Maple spaced 60 x 80. After double aeration with a rotary cultivator it was fertilized with mineral fertilizers containing assimilable nitrogen, phosphorus and potassium in the ratio 1:1:1 in pure element in the amount of 25 g per m². In the second and third year of the growing year due to good growth of plants no additional fertilization with mineral fertilizers containing nitrogen, phosphorus and potassium was applied. In the fourth year of vegetation no symptoms of deficiency in any of these elements were found. In the fifth year of vegetation, in late autumn, plants were cut down at a height of about 3 cm from the ground level. To check the intensity of the re-cultivation one of the trees with a root system was pulled, which is depicted in the images shown in Figure 1 and Figure 2. In the sixth year the regrowth of shoots was found in 98% of the felled trees. In autumn the shoots were cut, while one was left for each pre-cut tree.

The method from this invention allows for obtaining from 1 ha of a landfill site from 4 000 to 5 000 m³ of wood in 5 years. Boxelder Maple wood has high hardness amounting to 73 MPa (higher than oak or beech), which allows to use it in the building industry (seals, framework), while a good calorific value makes it well suited for heating purposes. Afforestation of a landfill site causes a significant increase in the amount of cumulative rainwater. In addition, 1 ha of land rehabilitated according to this invention causes absorption of 250 to 300 tons of carbon dioxide. Stilt root system of Boxelder Maple is very developed and the total length of roots in a perennial tree can reach several kilometres, at a depth of up to 12 m. High density planting of maple trees (60 cm x 80 cm) forces the tree to deep penetration into the landfill. Roots spread to form a very dense network, which prevents penetrating contaminants into groundwater, while at the same time a dense root system causes the degassing of the deeper layers of the rehabilitated site. The root hairs of maple form a perfect symbiosis with mushrooms - mycorrhiza, which facilitates the distribution of chemical and biological substances contained in the soil of a landfill or contaminated soil. In autumn large maple leaves form a natural coat around the stems, preventing them from frost.

## Claims

1. The method of waste dump re-cultivation, particularly re-cultivation of municipal waste in which the surface of an area undergoing re-cultivation is covered with a layer of humus and sown with plants, **characterized in that** the area of undergoing re-cultivation is covered with a layer of humus the thickness of which varies from 0,2 to 0,25 m and in spring it is planted with saplings of Boxelder Maple (Acer negundo) spaced from 0,8 x 0,6 m to 0,8 x 0,8 m but during the vegetation period from spring to late autumn at least one aeration of land is carried out with a rotary cultivator and in the first year of vegetation it is fertilized with mineral fertilizers containing assimilable nitrogen, phosphorus and potassium in the ratio 1:1:1 per pure element in the amount of 10 g to 50 g per m² of the surface area undergoing re-cultivation, while in the second and third year of the growing year soil samples are taken from the depth of 25 cm to 40 cm together with samples of wood pulp and determination of nitrogen, phosphorus and potassium is carried out and then the amount and the relationship of these elements is adjusted to the results obtained and in the fourth year of vegetation an observation shall be made and, depending on the observed symptoms of deficiency of one element, proper fertilization shall be applied, whereas in the fifth year of vegetation, in autumn, plants shall be cut down at a height of not more than 5 cm from the ground level and in the sixth year of cultivation, in spring, a few shoots growing out at each trunk are allowed to grow free so that in autumn the strongest shoot can be left and the perennial cycle can be repeated.

2. The re-cultivation method according to claim 1 **characterized in that** the first year of vegetation from spring to late autumn three aerations of the area are carried out using a rotary cultivator destroying weeds and lichen.

3. The re-cultivation method according to claim 1 **characterized in that** the fifth year of vegetation felled trees are subjected to seasoning.
